(19) Europäisches Patentamt / European Patent Office / Office européen des brevets

(11) **EP 1 829 714 B1**

(12) **FASCICULE DE BREVET EUROPEEN**

(45) Date de publication et mention
de la délivrance du brevet:
**30.06.2010   Bulletin 2010/26**

(51) Int Cl.:
***B60C 23/06*** *(2006.01)*        ***B60C 23/00*** *(2006.01)*

(21) Numéro de dépôt: **07102743.7**

(22) Date de dépôt: **20.02.2007**

(54) **Méthode pour déterminer l'état de charge d'un véhicule.**

Verfahren zum Bestimmen des Ladungszustands eines Fahrzeugs

Method of determining the loaded state of a vehicle.

(84) Etats contractants désignés:
**AT BE BG CH CY CZ DE DK EE ES FI FR GB GR HU IE IS IT LI LT LU LV MC NL PL PT RO SE SI SK TR**

(30) Priorité:  **01.03.2006   FR 0601828**

(43) Date de publication de la demande:
**05.09.2007   Bulletin 2007/36**

(73) Titulaires:
- **Société de Technologie Michelin
  63000 Clermont-Ferrand (FR)**
- **Michelin Recherche et Technique S.A.
  1763 Granges-Paccot (CH)**
- **TRW Automotive U.S. LLC
  Livonia,
  Michigan 48150 (US)**

(72) Inventeur: **Corniot, Philippe
63530 ENVAL (FR)**

(74) Mandataire: **Le Cam, Stéphane Georges Elie
Manufacture Francaise des Pneumatiques
Michelin
23, place des Carmes-Déchaux
SGD/LG/PI - F35- Ladoux
63040 Clermont-Ferrand Cedex 9 (FR)**

(56) Documents cités:
EP-A1- 0 564 285          WO-A-00/69662
WO-A-03/016115          WO-A-2005/097525
DE-A1-102004 026 833

**Description**

Domaine de l'invention

La présente invention concerne les méthodes pour déterminer l'état de charge d'un véhicule ainsi que les méthodes de surveillance de la pression de gonflage de pneumatiques, permettant d'avertir le conducteur du besoin d'adapter la pression de gonflage et/ou de déclencher l'adaptation automatique de cette pression.

Arrière-plan technologique

Pour tout véhicule équipé de pneumatiques, la surveillance de la pression de gonflage des pneumatiques est une démarche essentielle pour garantir la sécurité des occupants du véhicule et des autres usagers de la route. Par exemple, lorsque la pression de gonflage d'un pneumatique est insuffisante, les flancs du pneumatique travaillent anormalement, ce qui peut entraîner une fatigue excessive de la carcasse, une élévation de la température et une usure anormale : le pneu risque de subir des dommages irréversibles, le risque majeur étant évidemment l'éclatement du pneumatique en service et la perte de maîtrise du véhicule par son conducteur. A l'opposé, une pression de gonflage excessive peut provoquer des problèmes de stabilité du véhicule, car le contact du pneumatique avec le sol se trouve diminué.

Il n'est cependant pas possible de définir une pression de gonflage unique à viser pour un pneumatique donné monté sur un véhicule donné ; cette pression dépend des conditions d'utilisation et, en particulier de la charge portée par le véhicule : lorsque la charge portée par le véhicule augmente, la pression de gonflage doit être augmentée. En effet, la charge pouvant être portée par un pneumatique dépend de son volume interne et de sa pression de gonflage. Si le rapport pression / charge est correct, les flancs du pneumatique subissent une flexion adaptée et la longévité de la carcasse est assurée.

Le problème se pose non seulement lors du gonflage du pneumatique, mais aussi pour la surveillance continue de la pression de gonflage. Un système visant à avertir un conducteur d'une anomalie au niveau de la pression de gonflage devrait en principe tenir compte de la charge réellement portée par le véhicule : une même pression de gonflage peut être correcte pour un véhicule non chargé et insuffisante lorsque le véhicule est fortement chargé.

La définition d'un seuil d'avertissement prédéterminé ne permet pas de s'affranchir de cette difficulté. Si on fixe le seuil d'avertissement à la pression de gonflage minimale qui serait encore acceptable pour un véhicule ne portant pas de charge ($P_{min}$ ($z_0$)), des cas où la pression de gonflage serait supérieure à ce seuil mais insuffisante par rapport à la charge réellement portée par le véhicule ne seraient pas détectés. Inversement, si on fixe le seuil d'avertissement à la pression minimale qui serait encore acceptable pour un pneumatique portant sa charge maximale ($P_{min}$ ($z_{max}$)), l'avertissement pourrait intervenir alors que le rapport pression / charge serait loin d'être réellement défavorable, notamment lorsque le véhicule est peu ou pas chargé. Un tel seuil aurait aussi l'inconvénient d'être trop proche de la pression préconisée pour un véhicule non chargé : en effet, les variation de température du pneumatique etc. font que la surveillance n'est possible qu'avec une précision supérieure à 0.3 bar. Si la différence entre le seuil d'avertissement et la pression de gonflage préconisée pour un véhicule ne portant pas de charge est inférieure à 0.3 bar, une détection d'anomalies fiable et pertinente n'est pas possible.

Ce qui vient d'être dit doit encore être complété par la considération de la position du pneumatique sur le véhicule. Selon qu'un pneumatique est monté sur l'essieu avant ou sur l'essieu arrière d'un véhicule, la charge qu'il porte peut être très différente et varier grandement en fonction de la charge portée par le véhicule. Dans un véhicule de type traction ayant son moteur à l'avant, la charge portée par les pneumatiques de l'essieu avant est très significativement plus grande que la charge portée par les pneumatiques de l'essieu arrière lorsque le véhicule est à vide, c'est-à-dire ne porte pas de charge ; la différence de charge s'amenuise lorsque la charge portée par le véhicule augmente. Inversement, dans un véhicule de type propulsion ayant son moteur à l'avant, la différence de charge entre un pneumatique monté sur l'essieu avant et un pneumatique monté sur l'essieu arrière est faible lorsque le véhicule est à vide et augmente lorsque la charge portée par le véhicule augmente.

C'est pour cette raison que les constructeurs de véhicules fournissent en général des tableaux de gonflage permettant aux utilisateurs d'adapter la pression de gonflage à la charge portée par le véhicule, en tenant compte de la position des pneumatiques sur le véhicule. Ces tableaux comportent en général au moins les pressions de gonflage préconisées pour les pneumatiques de chaque essieu, dans deux états de charge : à faible et à forte charge. Le bon usage de tels tableaux présuppose donc la connaissance de la charge actuellement portée par le véhicule. L'ignorance de cette charge introduit un facteur d'incertitude dans la détermination de la pression de gonflage et, par conséquent, a tendance à réduire la marge de sécurité de l'utilisateur du véhicule. Il serait bien évidemment possible de résoudre cette difficulté en équipant le véhicule de capteurs de charge, mais le prix d'un tel équipement est tel que la plupart des véhicules n'en sont pas équipés.

Le document **WO 03/016115-A,** qui est considéré comme étant l'état de la technique le plus proche, décrit une méthode pour déterminer l'état de charge d'un pneumatique d'un véhicule et/ou pour surveiller la pression de gonflage du pneumatique. Cette méthode comporte les étapes suivantes : (1) détermination de la pression dans les différents pneumatiques du véhicule ; (2) surveillance du comportement rotatif des roues ; (3) détermination de caractéristiques de la distribution de charge par comparaison des comportements rotatifs (ou de leur variation) ; (4) calcul de l'état de charge et/ou de la perte de pression sur la base de la pression de gonflage et des caractéristiques de la distribution de charge.

Le document **WO 2005/097525-A** divulgue une méthode permettant de déterminer la « sensibilité » d'un pneumatique, c'est-à-dire le changement de la circonférence de roulement du pneumatique résultant d'une perte de pression de gonflage. Cette méthode comporte la détermination de la charge portée par le pneumatique, par exemple sur la base de l'accélération latérale du véhicule et la détermination d'informations concernant la vitesse de roulement, telles que le temps de rotation, la vitesse de rotation ou la circonférence de roulement. La sensibilité du pneumatique est ensuite calculée à partir du changement de ces informations en fonction du changement de la charge portée.

L'invention cherche à permettre une détermination de la charge portée par un véhicule et de la pression de gonflage des pneumatiques adaptée à cette charge, sans mesure directe de la charge portée par les pneumatiques, par l'exploitation des signaux disponibles dans un véhicule équipé de dispositifs permettant de déterminer, directement ou indirectement, les fréquences ou vitesses de rotation des ensembles pneumatique-roue (comme, par exemple, un système ABS) et leurs pressions de gonflage. Dans ce qui suit, on entend par « pression de gonflage d'un ensemble pneumatique-roue » la pression de gonflage du pneumatique faisant partie de l'ensemble pneumatique-roue.

L'objectif est atteint à l'aide d'une méthode pour déterminer l'état de charge d'un véhicule en mouvement à une vitesse non nulle, le véhicule étant équipé d'une pluralité d'ensembles pneumatique-roue montés sur au moins deux essieux et de dispositifs permettant de déterminer la vitesse du véhicule, les fréquences ou vitesses de rotation et les pressions courantes de gonflage d'au moins deux ensembles pneumatique-roue montés sur deux essieux différents, la méthode comportant les étapes suivantes :

(A) déterminer les pressions de gonflage et les fréquences de rotation de deux ensembles pneumatique-roue montés sur deux essieux différents ,

(B) calculer la différence de charge entre les deux ensembles pneumatique-roue à partir de la vitesse du véhicule et des fréquences de rotation des deux ensembles pneumatique-roue, en tenant compte des pressions courantes de gonflage ;

(C) déterminer l'état de charge en comparant la différence de charge calculée avec au moins un seuil préétabli.

La méthode selon l'invention se distingue des méthodes connues, telle que la méthode divulguée dans le document WO 03/016115, par la prise en compte de la valeur courante de la pression de gonflage. Ainsi, il devient possible de détecter, non seulement un état de surcharge du véhicule, mais surtout une inadaptation de la pression courante de gonflage par rapport à la charge actuelle.

Le calcul de la différence de charge entre les deux ensembles pneumatique-roue à partir de la vitesse du véhicule, des pressions de gonflage et des fréquences de rotation des deux ensembles pneumatique-roue peut notamment être effectué comme suit.

Dans un premier temps, on détermine un « rayon de roulement » $R_i(t)$ de la roue $i$, à partir de la vitesse v du véhicule et de la fréquence de rotation $f_i$ de la roue $i$ : La relation

$$\mathrm{v} = \omega_i \cdot R_i = 2 \cdot \pi \cdot f_i \cdot R_i \qquad (1)$$

$\omega_i$ étant la vitesse angulaire de la roue $i$, permet d'écrire :

$$R_i(t) = \frac{\mathrm{v}(t)}{2 \cdot \pi \cdot f_i(t)} \qquad (2)$$

Ce « rayon de roulement » est bien entendu une grandeur virtuelle et ne correspond pas forcément à un rayon du pneumatique écrasé par la charge.

Etant donné qu'il est difficile de définir un état de référence pour une roue donnée, on procède par comparaisons entre les roues. On définit un « écrasement relatif » d'une roue i par rapport à la roue de référence « 0 » :

$$E_{i,0}^{rel}(t) \equiv \frac{R_i(t) - R_0(t)}{R_0(t)} \qquad (3)$$

Par insertion de (2) dans (3), on obtient

$$E_{i,0}^{rel}(t) = \frac{\dfrac{v}{2 \cdot \pi \cdot f_i} - \dfrac{v}{2 \cdot \pi \cdot f_0}}{\dfrac{v}{2 \cdot \pi \cdot f_0}} = \frac{\dfrac{1}{f_i} - \dfrac{1}{f_0}}{\dfrac{1}{f_0}} = \frac{f_0}{f_i} - \frac{f_0}{f_0} = \frac{f_0}{f_i} - 1 \qquad (4)$$

La mesure des fréquences de rotation $f_0$ et $f_i$ permet donc de calculer très facilement l'écrasement relatif.

Il est possible d'effectuer un développement limité des variations du rayon de roulement en fonction des paramètres qui l'influencent de façon importante, à savoir la pression de gonflage $P_i$ du pneumatique monté sur la roue $i$ et la charge $z_i$ qu'il porte, ainsi que la fréquence de rotation $f_0$ mesurée pour la roue de référence ; on obtient alors pour l'écrasement relatif l'expression suivante :

$$E_{i,0}^{rel}(t) = \frac{R_i(t) - R_0(t)}{R_0(t)} = \frac{\left[ \dfrac{\partial R_{i,0}}{\partial P} \cdot (P_i(t) - P_0(t)) + \dfrac{\partial R_{i,0}}{\partial z} \cdot (z_i(t) - z_0(t)) + \dfrac{\partial R_{i,0}}{\partial f} \cdot f_0(t) + \delta R_{i,0} \right]}{R_0(t)} \qquad (5)$$

On peut en déduire l'expression suivante pour la différence de charge :

$$z_i(t) - z_0(t) = \frac{R_0(t) \cdot E_{i,0}^{rel}(t) - \delta R_{i,0} - \dfrac{\partial R_{i,0}}{\partial P} \cdot (P_i(t) - P_0(t)) - \dfrac{\partial R_{i,0}}{\partial f} \cdot f_0(t)}{\dfrac{\partial R_{i,0}}{\partial z}} \qquad (6)$$

Dans la plupart des véhicules, la charge portée par l'un des essieux (en général, celui qui porte le poids du moteur) est pratiquement indépendante de l'état de charge du véhicule. Si tel est le cas, la détermination de l'état de charge peut se faire à partir de la différence de charge entre une roue avant et une roue arrière, ce qui permet par ailleurs de réduire le nombre de roues équipées de capteurs. Il est particulièrement avantageux de considérer deux roues montées sur le même côté du véhicule (de préférence, le côté du conducteur), car cela permet d'éviter l'influence des virages. En déterminant un seuil pour $z_i(t)-z_0(t)$ on peut alors distinguer, par exemple, l'état « chargé » de l'état « non chargé ». Bien entendu, une distinction plus fine peut également être envisagée.

Nous pouvons écrire l'équation (6) de la manière suivante :

$$z_i(t) - z_0(t) = a \cdot E_{i,0}(t) + b \cdot (P_i(t) - P_0(t)) + c \cdot f_0(t) + d \qquad (7)$$

$$a \equiv \frac{R_0(t)}{\frac{\partial R_{i,0}}{\partial z}} \qquad b \equiv -\frac{\frac{\partial R_{i,0}}{\partial P}}{\frac{\partial R_{i,0}}{\partial z}} \qquad c \equiv -\frac{\frac{\partial R_{i,0}}{\partial f}}{\frac{\partial R_{i,0}}{\partial z}} \qquad d \equiv -\frac{\delta R_{i,0}}{\frac{\partial R_{i,0}}{\partial z}} \qquad (8)$$

Les coefficients $a$ à $d$ doivent être déterminés une fois pour chaque type de véhicule et chaque type de pneumatiques. On effectue $N$ essais dans lesquels le véhicule est utilisé dans des conditions de charge, de vitesse, de pression de gonflage etc. différentes. A chaque fois, la différence de charge, la vitesse du véhicule, les pressions de gonflage, et les fréquences de rotation des ensembles pneumatique-roue sont enregistrés. La détermination des coefficients revient alors à la résolution d'un système d'équations de premier degré :

$$\begin{bmatrix} E_{i,0}^{rel}(t_1) & P_i(t_1) - P_0(t_1) & f_0(t_1) & 1 \\ \vdots & \vdots & \vdots & \vdots \\ E_{i,0}^{rel}(t_N) & P_i(t_N) - P_0(t_N) & f_0(t_N) & 1 \end{bmatrix} \otimes \begin{bmatrix} a \\ b \\ c \\ d \end{bmatrix} = \begin{bmatrix} z_i(t_1) - z_0(t_1) \\ \vdots \\ z_i(t_N) - z_0(t_N) \end{bmatrix} \qquad (9)$$

Une fois que les coefficients sont connus, la différence de charge peut être calculée à partir de la vitesse du véhicule, des pressions de gonflage et des fréquences de rotation en utilisant l'équation (7).

L'invention concerne également une méthode pour surveiller la pression de gonflage d'un premier ensemble pneumatique-roue d'un véhicule en mouvement à une vitesse non nulle, le véhicule étant équipé d'une pluralité d'ensembles pneumatique-roue montés sur au moins deux essieux et de dispositifs permettant de déterminer la vitesse du véhicule, les fréquences ou vitesses de rotation et les pressions courantes de gonflage d'au moins deux ensembles pneumatique-roue montés sur deux essieux différents, la méthode comportant les étapes suivantes :

(A) déterminer les pressions de gonflage et les fréquences de rotation de deux ensembles pneumatique-roue montés sur deux essieux différents ;

(B) calculer la différence de charge entre les deux ensembles pneumatique-roue à partir de la vitesse du véhicule et des fréquences de rotation des deux ensembles pneumatique-roue, en tenant compte des pressions courantes de gonflage ;

(C) déterminer l'état de charge en comparant la différence de charge calculée avec au moins un seuil préétabli ;

(D) déterminer un seuil inférieur pour la pression de gonflage, adapté à l'état de charge du véhicule et à la position dudit premier ensemble pneumatique-roue sur le véhicule ;

(E) déterminer la pression de gonflage dudit premier ensemble pneumatique-roue et alerter le conducteur du véhicule si la pression de gonflage du premier ensemble pneumatique-roue est inférieure audit seuil inférieur.

Les étapes (A) à (C) sont identiques à celles décrites plus haut pour la méthode pour déterminer l'état de charge ; les mêmes choix préférentiels s'appliquent.
Enfin, l'invention concerne une méthode pour adapter la pression de gonflage d'un premier ensemble pneumatique-roue d'un véhicule en mouvement à une vitesse non nulle, le véhicule étant équipé

- d'une pluralité d'ensembles pneumatique-roue montés sur au moins deux essieux,

- de dispositifs permettant de déterminer la vitesse du véhicule, les fréquences ou vitesses de rotation et les pressions courantes de gonflage d'au moins deux ensembles pneumatique-roue montés sur deux essieux différents, et

- d'un dispositif permettant de modifier la pression de gonflage dudit premier ensemble pneumatique-roue,

la méthode comportant les étapes suivantes :

(A) déterminer les pressions de gonflage et les fréquences de rotation de deux ensembles pneumatique-roue montés sur deux essieux différents ;

(B) calculer la différence de charge entre les deux ensembles pneumatique-roue à partir de la vitesse du véhicule et des fréquences de rotation des deux ensembles pneumatique-roue, en tenant compte des pressions courantes de gonflage ;

(C) déterminer l'état de charge en comparant la différence de charge calculée avec au moins un seuil préétabli ;

(D) déterminer un seuil inférieur pour la pression de gonflage dudit premier ensemble pneumatique-roue, adapté à l'état de charge du véhicule et à la position dudit premier ensemble pneumatique-roue sur le véhicule ;

(E) déterminer la pression de gonflage dudit premier ensemble pneumatique-roue et augmenter cette pression de gonflage si elle est inférieure audit seuil inférieur.

De nouveau, les étapes (A) à (C) sont identiques à celles décrites plus haut pour la méthode pour déterminer l'état de charge ; les mêmes choix préférentiels s'appliquent.

Les résultats obtenus par les méthodes selon l'invention peuvent être améliorés si le véhicule comporte en outre des dispositifs permettant de déterminer une température associée à chacun des pneumatiques desdits au moins deux ensembles pneumatique-roue, comme par exemple la température du gaz de gonflage du pneumatique ; le calcul de la différence de charge peut alors tenir compte de cette température. L'expression (7) devient alors

$$z_i(t) - z_0(t) = a \cdot E_{i,0}(t) + b \cdot \left(P_i(t) - P_0(t)\right) + c \cdot f_0(t) + d \cdot \left(T_i(t) - T_0(t)\right) + e \qquad (10)$$

avec

$$a \equiv \frac{R_0(t)}{\dfrac{\partial R_{i,0}}{\partial z}} \qquad b \equiv -\frac{\dfrac{\partial R_{i,0}}{\partial P}}{\dfrac{\partial R_{i,0}}{\partial z}} \qquad c \equiv -\frac{\dfrac{\partial R_{i,0}}{\partial f}}{\dfrac{\partial R_{i,0}}{\partial z}} \qquad d \equiv -\frac{\dfrac{\partial R_{i,0}}{\partial T}}{\dfrac{\partial R_{i,0}}{\partial z}} \qquad e \equiv -\frac{\dfrac{\delta R_{i,0}}{\partial R_{i,0}}}{\dfrac{\partial R_{i,0}}{\partial z}} \qquad (11)$$

Il sera donc nécessaire de déterminer cinq coefficients au lieu de quatre pendant la phase d'apprentissage décrite plus haut.

Selon un mode de réalisation préférentiel, la détermination de l'état de charge n'est effectuée que lorsque la vitesse du véhicule dépasse une certaine limite prédéterminée, par exemple 15 km/h (vitesse en deçà de laquelle les mesures fournies par un système ABS peuvent être trop imprécises) ou 50 km/h (vitesse de test prescrite par le US *Tread Act).* Le choix de cette vitesse est effectué au cas par cas, de préférence en même temps que les coefficients entrant dans formule (7).

Les méthodes selon l'invention peuvent être rendues plus robustes si les étapes (A) et (B) sont effectuées pour au moins deux paires d'ensembles pneumatique-roue différents et si la détermination de l'état de charge se fait sur la base d'au moins deux différences de charge calculées.

L'invention sera mieux comprise grâce à la description des dessins selon lesquels:

- la figure 1 montre un diagramme de gonflage ;

- la figure 2 représente les différentes configurations de mesure préférentielles pour déterminer les pressions de gonflage et les fréquences de rotation de deux ensembles pneumatique-roue montés sur deux essieux différents ;

- les figures 3 et 4 représentent un algorithme de calcul utilisé dans une méthode selon l'invention ;

- la figure 5 représente les résultats obtenus avec la méthode selon l'invention.

Description de modes de réalisation

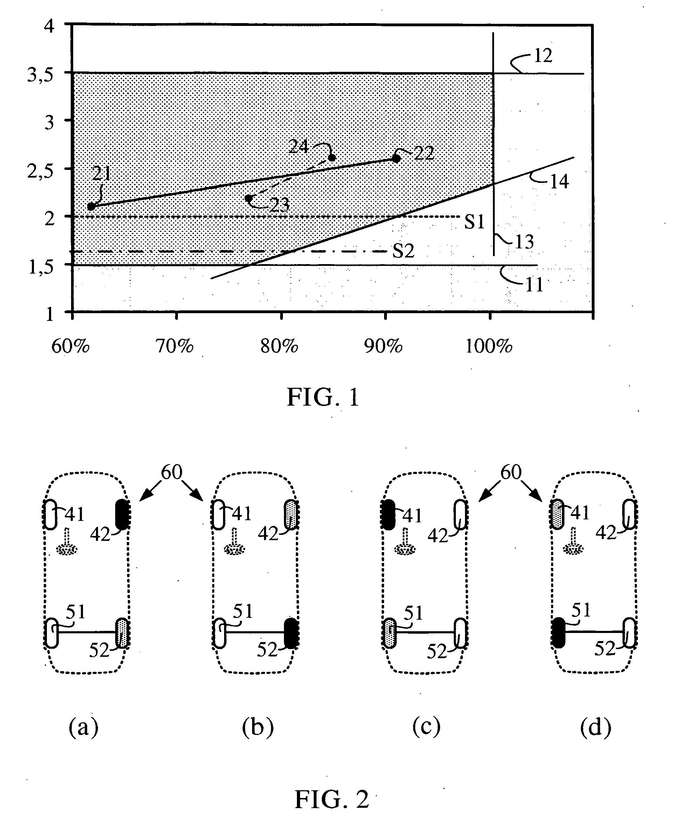

La figure 1 montre un diagramme de gonflage pour un pneumatique de dimension 205/55R16 91H. L'abscisse correspond au pourcentage de la charge maximale que le pneumatique peut porter ; l'ordonnée représente sa pression de gonflage (en bar).

La zone grisée correspond aux combinaisons de pressions de gonflage et de charges auxquelles le pneumatique peut être soumis dans le cadre des différentes lois (comme, par exemple, le US *Tread Act)* et standards (par exemple, les standards de la European Tire and Rim Organisation (ETRTO) ou de la Tire and Rim Association (TRA)) applicables. Cette zone est délimitée en pression par la pression minimale prescrite par la loi (actuellement 1,5 bar en Europe pour les véhicules de tourisme), représentée par la ligne droite 11, et par la pression maximale admise (en l'occurrence 3,5 bar), représentée par la ligne droite 12. En charge, il y a la limitation en charge due aux limites de l'architecture du pneumatique (ligne 13), mais ce n'est pas la seule limite à respecter, car, lorsque le pneumatique est fortement chargé (en l'occurrence, au-delà de 75 % de ses capacités) la pression de gonflage minimale légale n'est pas suffisante pour permettre un bon fonctionnement. Des standards supplémentaires, représentées par la ligne droite 14 réduisent donc la zone autorisée dans le domaine des fortes charges. En résumé, on peut dire que tant que la pression et la charge portée par le pneumatique le placent à l'intérieur de la zone grisée, il fonctionne dans un régime autorisé par la législation et par les standards applicables.

Bien entendu, les pressions de gonflage préconisées par le constructeur du véhicule sur lequel est monté l'ensemble pneumatique-roue se trouvent à l'intérieur de cette zone. La figure 1 montre les quatre pressions préconisées pour un véhicule fonctionnant en traction, à la fois pour les pneumatiques de l'essieu arrière (à faible charge, point 21, et à forte charge, point 22) et pour les pneumatiques de l'essieu avant (à faible charge, point 23, et à forte charge, point 24). La charge portée par pneumatiques montés à l'arrière varie de façon beaucoup plus importante en fonction de la charge portée par le véhicule, alors que l'ajout d'un chargement n'a que peu d'influence sur la charge portée par les pneumatiques avant qui portent notamment le poids du moteur du véhicule.

Lorsque le véhicule est faiblement chargé et la pression d'un pneumatique baisse, on ne quitte la zone grisée que lorsque la pression minimale de 1,5 bar est atteinte. Un système de surveillance de la pression pourrait donc être programmé de façon à déclencher une alerte (ou une augmentation de la pression de gonflage) lorsque le seuil représenté par la ligne S2 est franchi. Ce seuil n'est cependant plus acceptable lorsque le véhicule est fortement chargé, car au-delà d'un pourcentage de charge de 80 %, ce seuil se trouve en dehors de la zone autorisée (grisée). Or si on adopte un seuil plus élevé, suffisant pour déclencher une alerte à temps lorsque le véhicule est fortement chargé (ligne S1), le système risque de déclencher de fausses alertes lorsque le véhicule est faiblement chargé, car la pression de gonflage préconisée est très proche de la valeur du seuil. Une simple variation de la température ambiante de 20° pouvant entraîner une variation de la pression de gonflage de l'ordre de 0,2 bar, il est évident que l'écart entre la pression de gonflage préconisée et la valeur du seuil de déclenchement d'une alerte devra être au moins de l'ordre de 0,3 bar.

Plusieurs voies ont été proposées pour surmonter cette difficulté. Il est possible d'augmenter la pression de gonflage préconisée à faible charge, de sorte à l'éloigner du seuil d'avertissement, mais cette approche dégrade le confort de l'utilisateur du véhicule, et ce uniquement pour tenir compte d'un mode d'utilisation (forte charge) qui peut être rare. Une autre solution serait de confier au conducteur du véhicule la responsabilité d'indiquer l'état de charge du véhicule, par exemple en appuyant un bouton « forte charge » lorsque le véhicule est fortement chargé. Cette approche a l'inconvénient d'introduire le facteur humain dans la chaîne de surveillance de la pression : si l'utilisateur oublie ou néglige d'appuyer le bouton, il s'expose à un certain risque d'utiliser les pneumatiques dans des conditions qui peuvent dégrader les performances de ceux-ci sans être averti par le système de surveillance. La méthode selon l'invention permet de s'affranchir des inconvénients liés à ces deux stratégies.

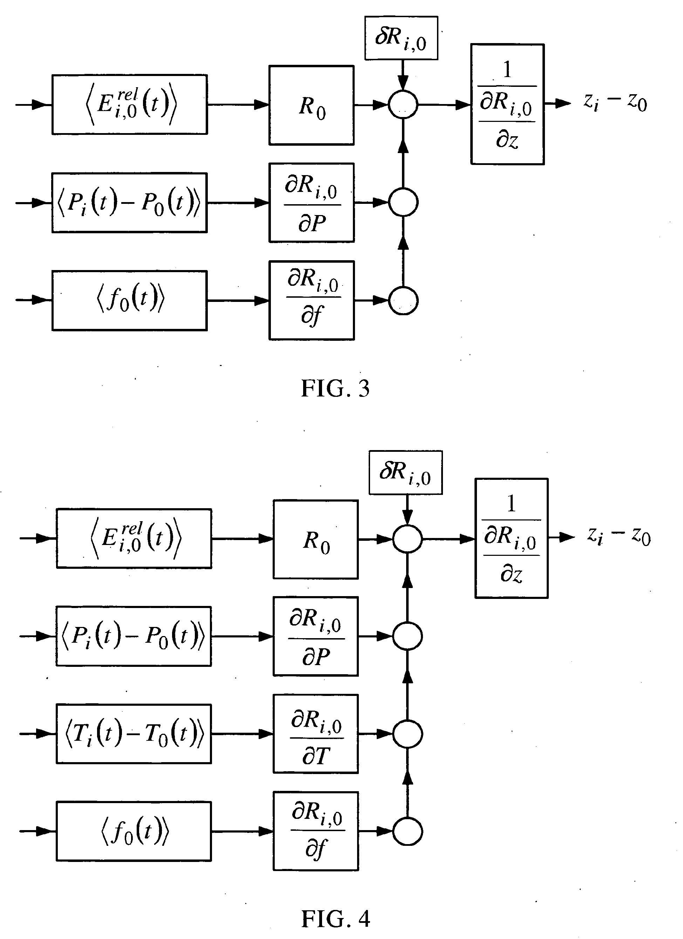

Comme cela a été décrit plus haut, les méthodes selon l'invention permettent de détecter l'état de charge à partir des pressions de gonflage et des fréquences de rotation de deux ensembles pneumatique-roue montés sur deux essieux différents. L'un des deux ensembles sert de référence par rapport auquel l'écrasement relatif de l'autre ensemble est déterminé. Sur un véhicule comportant deux essieux et quatre ensembles pneumatique-roue, douze configurations sont possibles, mais il est préférable de considérer deux ensembles pneumatique-roue montés sur le même côté du véhicule, car cela permet de s'affranchir d'effets indésirables dues aux virages et aux accélérations. La figure 2 montre schématiquement les quatre configurations préférentielles. Chacun des quatre ensembles pneumatique roue 41, 42, 51 et 52 équipant le véhicule 60 peut servir de référence (indiquée par un ensemble dessiné en noir) ; le deuxième ensemble utilisé dans les méthodes selon l'invention est grisé. Il s'avère qu'il est préférable de considérer les deux ensembles pneumatique-roue montés sur le côté du conducteur (côté qui n'est pas le même selon les pays), c'est-à-dire de retenir les variantes (c) et (d) de la figure 4, car cette position est moins exposée aux perturbations (sollicitation dans les ronds points etc.).

La figure 3 représente schématiquement un algorithme mettant en oeuvre la méthode selon l'invention. Lorsque le véhicule est mis en mouvement, la vitesse v du véhicule 60 ainsi que les fréquences de rotation et les pressions de gonflage de tous les ensembles pneumatique-roue 41, 42, 51 et 52 (ou tout au moins des deux ensembles requis dans la méthode selon l'invention, par exemple les ensembles 42 et 52 pour la configuration de la figure 2(a)) sont déterminées et stockées. Pour atténuer le bruit, on effectue une moyenne glissante pour l'écrasement relatif $E_{i,0}^{rel}(t)$, *l*a différence

de pression $P_i(t) - P_0(t)$ et la fréquence de rotation $f_0$ de la roue de référence, pour obtenir les valeurs $\left\langle E_{i,0}^{rel}(t) \right\rangle$, $\langle P_i$ $(t) - P_0(t) \rangle$, et $\langle f_0 \rangle$. L'algorithme permet de calculer, à partir de ces données, la valeur de la différence de charge $z_i(t) - z_0$ $(t)$, en utilisant l'équation (7) et les coefficients déterminés lors d'une phase d'apprentissage préalable, comme décrit plus haut.

La figure 4 représente schématiquement un algorithme mettant en oeuvre la méthode selon l'invention, en intégrant également la température du pneumatique (ou, plus précisément, la température du gaz de gonflage du pneumatique). Le fonctionnement de l'algorithme ne s'en trouve pas fondamentalement modifié.

Un exemple chiffré permettra d'illustrer la mise en oeuvre de la méthode selon l'invention. Pour des raisons de simplicité, nous nous limiterons au cas d'une traction, mais il ne s'agit pas là d'une caractéristique limitative de l'invention. La Table 1 résume la différence de charge $z_i(t) - z_0(t)$ mesurées à l'aide d'une balance pour un véhicule de tourisme (petit monospace), dans les configurations correspondant aux figures 2(d) et 2(b).

Table 1

| $z_i(t) - z_0(t)$ [kg] | Configuration 2(d) côté gauche | Configuration 2(b) côté droit |
|---|---|---|
| Non chargé | 133 | 140.5 |
| Charge intermédiaire | 103.5 | 96 |
| Charge maxi | 61 | 50 |

Table 1 suggère qu'une précision de l'ordre de 20 kg sera nécessaire si l'état de charge doit être déterminé de façon relativement grossière, par exemple pour distinguer un état « forte charge » d'un état « non chargé ». Pour obtenir cette distinction, il faut définir un seuil à partir duquel on considère que la « forte charge » est atteinte. On pourrait par exemple, fixer ce seuil à 100 kg : lorsque une différence de charge $z_i(t) - z_0(t)$ égale ou inférieure à 100 kg est détectée, le dispositif mettant en oeuvre la méthode selon l'invention passe en mode « forte charge », ce qui pourra être utilisé pour définir un seuil de pression de gonflage adapté, ou encore, si le véhicule est équipé de dispositifs de gonflage, pour déclencher un gonflage d'appoint de certains pneumatiques.

La précision de la détermination de la différence de charge dépend, entre autres, du temps $T_f$ pendant lequel on moyenne les données mesurées sur le véhicule. La valeur optimale de $T_f$ doit être déterminée au cas par cas, de préférence en même temps que les coefficients entrant dans formule 7. De façon générale, on visera un temps situé entre 5 et 20 minutes, ce qui permet de satisfaire à la fois le besoin en précision et les obligations légales (le US *Tread Act* stipule qu'une anomalie de pression doit être détectée dans un temps ne dépassant pas 20 minutes).

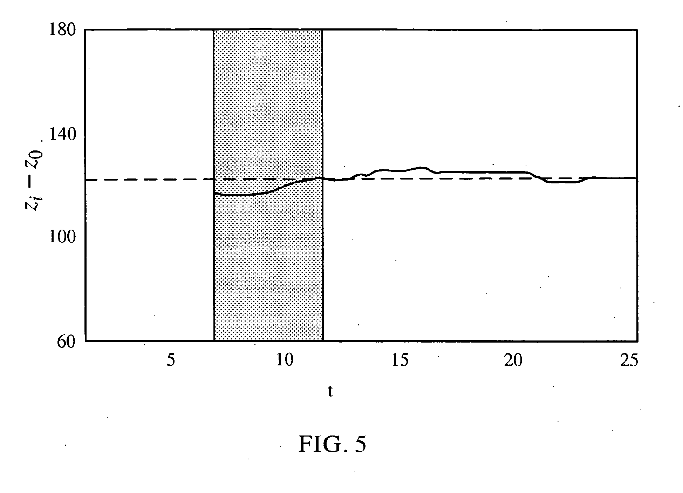

La figure 5 montre un résultat obtenu sur un véhicule de tourisme (petit monospace); on a tracé la différence de charge $z_i(t) - z_0(t)$, telle que calculée par l'algorithme de la figure 4, en fonction du temps (en minutes). La zone grisée correspond à la période séparant le moment du début des mesures (à environ 7 minutes) et le moment d'obtention de la première valeur à prendre en compte par le système de surveillance de la pression (cette période ayant une durée égale à $T_f$). Pendant cette période, la valeur calculée de $z_i(t) - z_0(t)$ converge vers la valeur réelle (indiquée par un trait tireté) : à l'issu de cinq minutes, on a obtenu une valeur très proche de la valeur réelle. Par la suite, on constate que le calcul s'éloigne légèrement de la valeur réelle, mais les écarts restent inférieurs à 10 kg.

**Revendications**

1. Méthode pour déterminer l'état de charge d'un véhicule (60) en mouvement à une vitesse non nulle, le véhicule étant équipé d'une pluralité d'ensembles pneumatique-roue (41-42, 51-52) montés sur au moins deux essieux et de dispositifs permettant de déterminer la vitesse du véhicule, les fréquences ou vitesses de rotation et les pressions courantes de gonflage d'au moins deux ensembles pneumatique-roue montés sur deux essieux différents, la méthode comportant les étapes suivantes:

    (A) déterminer les pressions de gonflage et les fréquences de rotation de deux ensembles pneumatique-roue montés sur deux essieux différents ;
    (B) calculer la différence de charge entre les deux ensembles pneumatique-roue à partir de la vitesse du véhicule et des fréquences de rotation des deux ensembles pneumatique-roue, en tenant compte des pressions courantes de gonflage ;
    (C) déterminer l'état de charge en comparant la différence de charge calculée avec au moins un seuil préétabli.

**2.** Méthode pour surveiller la pression de gonflage d'un premier ensemble pneumatique-roue d'un véhicule (60) en mouvement à une vitesse non nulle, le véhicule étant équipé d'une pluralité d'ensembles pneumatique-roue (41-42, 51-52) montés sur au moins deux essieux et de dispositifs permettant de déterminer la vitesse du véhicule, les fréquences ou vitesses de rotation et les pressions courantes de gonflage d'au moins deux ensembles pneumatique-roue montés sur deux essieux différents, la méthode comportant les étapes suivantes :

(A) déterminer les pressions de gonflage et les fréquences de rotation de deux ensembles pneumatique-roue montés sur deux essieux différents ;
(B) calculer la différence de charge entre les deux ensembles pneumatique-roue à partir de la vitesse du véhicule et des fréquences de rotation des deux ensembles pneumatique-roue, en tenant compte des pressions courantes de gonflage ;
(C) déterminer l'état de charge en comparant la différence de charge calculée avec au moins un seuil préétabli ;
(D) déterminer un seuil inférieur pour la pression de gonflage, adapté à l'état de charge du véhicule et à la position dudit premier ensemble pneumatique-roue sur le véhicule ;
(E) déterminer la pression de gonflage dudit premier ensemble pneumatique-roue et alerter le conducteur du véhicule si la pression de gonflage du premier ensemble pneumatique-roue est inférieure audit seuil inférieur.

**3.** Méthode pour adapter la pression de gonflage d'un premier ensemble pneumatique-roue (41-42, 51-52) d'un véhicule (60) en mouvement à une vitesse non nulle,
le véhicule étant équipé

- d'une pluralité d'ensembles pneumatique-roue montés sur au moins deux essieux,
- de dispositifs permettant de déterminer la vitesse du véhicule, les fréquences ou vitesses de rotation et les pressions courantes de gonflage d'au moins deux ensembles pneumatique-roue montés sur deux essieux différents, et
- d'un dispositif permettant de modifier la pression de gonflage dudit premier ensemble pneumatique-roue,

la méthode comportant les étapes suivantes :

(A) déterminer les pressions de gonflage et les fréquences de rotation de deux ensembles pneumatique-roue montés sur deux essieux différents ;
(B) calculer la différence de charge entre les deux ensembles pneumatique-roue à partir de la vitesse du véhicule et des fréquences de rotation des deux ensembles pneumatique-roue, en tenant compte des pressions courantes de gonflage ;
(C) déterminer l'état de charge en comparant la différence de charge calculée avec au moins un seuil préétabli ;
(D) déterminer un seuil inférieur pour la pression de gonflage dudit premier ensemble pneumatique-roue, adapté à l'état de charge du véhicule et à la position dudit premier ensemble pneumatique-roue sur le véhicule ;
(E) déterminer la pression de gonflage dudit premier ensemble pneumatique-roue et augmenter cette pression de gonflage si elle est inférieure audit seuil inférieur.

**4.** Méthode selon l'une des revendications 1 à 3, **caractérisée en ce que** le véhicule (60) comporte en outre des dispositifs permettant de déterminer une température associée à chacun des pneumatiques desdits au moins deux ensembles pneumatique-roue et **en ce que** le calcul de la différence de charge tient compte de cette température.

**5.** Méthode selon la revendication 4, **caractérisée en ce que** la température associée aux pneumatiques est la température du gaz de gonflage des pneumatiques.

**6.** Méthode selon l'une quelconque des revendications précédentes, **caractérisée en ce que** lesdits deux ensembles pneumatique-roue montés sur deux essieux différents sont montés sur le même côté du véhicule.

**7.** Méthode selon la revendication 6, **caractérisée en ce que** lesdits deux ensembles pneumatique-roue montés sur deux essieux différents sont montés sur le côté du conducteur du véhicule.

**8.** Méthode selon l'une quelconque des revendications précédentes, **caractérisée en ce que** la détermination de l'état de charge n'est effectuée que lorsque la vitesse du véhicule dépasse une certaine limite prédéterminée.

**9.** Méthode selon l'une quelconque des revendications précédentes, **caractérisée en ce que** les étapes (A) et (B) sont en outre effectuées pour au moins une autre paire d'ensembles pneumatique-roue différents et **en ce que** la détermination de l'état de charge se fait sur la base d'au moins deux différences de charge calculées.

**Claims**

1. Method for determining the load condition of a vehicle (60) moving at non-zero speed, the vehicle being equipped with a plurality of tyre-wheel assemblies (41-42, 51-52) mounted on at least two axles and with devices enabling determination of the vehicle's speed, the rotation frequencies or speeds and the actual inflation pressures of at least two tyre-wheel assemblies mounted on two different axles, the method comprising the following stages:

   (A) determination of the inflation pressures and rotation frequencies of two tyre-wheel assemblies mounted on two different axles;
   (B) calculation of the load difference between the two tyre-wheel assemblies from the vehicle's speed and the rotation frequencies of the two tyre-wheel assemblies, taking into account the actual inflation pressures;
   (C) determination of the load condition by comparing the calculated load difference with at least one predetermined threshold.

2. Method for monitoring the inflation pressure of a first tyre-wheel assembly of a vehicle (60) moving at non-zero speed, the vehicle being equipped with a plurality of tyre-wheel assemblies (41-42, 51-52) mounted on at least two axles and with devices enabling determination of the vehicle's speed, the rotation frequencies or speeds and the actual inflation pressures of at least two tyre-wheel assemblies mounted on two different axles, the method comprising the following stages:

   (A) determination of the inflation pressures and rotation frequencies of two tyre-wheel assemblies mounted on two different axles;
   (B) calculation of the load difference between the two tyre-wheel assemblies from the vehicle's speed and the rotation frequencies of the two tyre-wheel assemblies, taking into account the actual inflation pressures;
   (C) determination of the load condition by comparing the calculated load difference with at least one predetermined threshold;
   (D) determination of a lower threshold for the inflation pressure, appropriate for the load condition of the vehicle and for the position of the said first tyre-wheel assembly on the vehicle;
   (E) determination of the inflation pressure of the said first tyre-wheel assembly and alerting of the driver of the vehicle if the inflation pressure of the first tyre-wheel assembly is below the said lower threshold.

3. Method for adapting the inflation pressure of a first tyre-wheel assembly (41-42, 51-52) of a vehicle (60) moving at non-zero speed, the vehicle being equipped with:

   - a plurality of tyre-wheel assemblies mounted on at least two axles,
   - devices enabling determination of the vehicle's speed, the rotation frequencies or speeds and the actual inflation pressures of at least two tyre-wheel assemblies mounted on two different axles, and
   - a device which enables the inflation pressure of the said first tyre-wheel assembly to be modified,

   the method comprising the following stages:

   (A) determination of the inflation pressures and rotation frequencies of two tyre-wheel assemblies mounted on two different axles;
   (B) calculation of the load difference between the two tyre-wheel assemblies from the vehicle's speed and the rotation frequencies of the two tyre-wheel assemblies, taking into account the actual inflation pressures;
   (C) determination of the load condition by comparing the calculated load difference with at least one predetermined threshold;
   (D) determination of a lower threshold for the inflation pressure, appropriate for the load condition of the vehicle and for the position of the said first tyre-wheel assembly on the vehicle;
   (E) determination of the inflation pressure of the said first tyre-wheel assembly and increase of that inflation pressure if it is below the said lower threshold.

4. Method according to any of Claims 1 to 3, **characterised in that** the vehicle (60) also comprises devices that enable determination of a temperature associated with each of the tyres of the said at least two tyre-wheel assemblies, and **in that** the load difference calculation takes that temperature into account.

5. Method according to Claim 4, **characterised in that** the temperature associated with the tyres is the temperature of the tyre inflation gas.

6. Method according to any of the preceding claims, **characterised in that** the said two tyre-wheel assemblies mounted on two different axles are mounted on the same side of the vehicle.

7. Method according to Claim 6, **characterised in that** the said two tyre-wheel assemblies mounted on two different axles are mounted on the driver's side of the vehicle.

8. Method according to any of the preceding claims, **characterised in that** the load condition is only determined when the vehicle's speed exceeds a certain predetermined limit.

9. Method according to any of the preceding claims, **characterised in that** the stages (A) and (B) are also carried out for at least one other, different pair of tyre-wheel assemblies, and the load condition is determined on the basis of at least two calculated load differences.

**Patentansprüche**

1. Verfahren zur Bestimmung des Belastungszustands eines mit einer Geschwindigkeit ungleich Null in Bewegung befindlichen Fahrzeugs (60), wobei das Fahrzeug mit mehreren Reifen-Rad-Einheiten (41-42, 51-52), die auf mindestens zwei Achsen montiert sind, und mit Vorrichtungen ausgestattet ist, die es ermöglichen, die Geschwindigkeit des Fahrzeugs, die Drehfrequenzen oder Drehgeschwindigkeiten und die laufenden Fülldrücke von mindestens zwei auf zwei unterschiedliche Achsen montierten Reifen-Rad-Einheiten zu bestimmen, wobei das Verfahren die folgenden Schritte aufweist:

(A) Bestimmen der Fülldrücke und der Drehfrequenzen von zwei Reifen-Rad-Einheiten, die auf zwei verschiedene Achsen montiert sind;
(B) Berechnen der Belastungsdifferenz zwischen den zwei Reifen-Rad-Einheiten ausgehend von der Geschwindigkeit des Fahrzeugs und den Drehfrequenzen der zwei Reifen-Rad-Einheiten, unter Berücksichtigung der laufenden Fülldrücke;
(C) Bestimmen des Belastungszustands durch Vergleich der berechneten Belastungsdifferenz mit mindestens einem vorab erstellten Schwellwert.

2. Verfahren zur Überwachung des Fülldrucks einer ersten Reifen-Rad-Einheit eines mit einer Geschwindigkeit ungleich Null in Bewegung befindlichen Fahrzeugs (60), wobei das Fahrzeug mit mehreren Reifen-Rad-Einheiten (41-42, 51-52), die auf mindestens zwei Achsen montiert sind, und mit Vorrichtungen ausgestattet ist, die es ermöglichen, die Geschwindigkeit des Fahrzeugs, die Drehfrequenzen oder Drehgeschwindigkeiten und die laufenden Fülldrücke von mindestens zwei auf zwei verschiedene Achsen montierten Reifen-Rad-Einheiten zu bestimmen, wobei das Verfahren die folgenden Schritte aufweist:

(A) Bestimmen der Fülldrücke und der Drehfrequenzen von zwei Reifen-Rad-Einheiten, die auf zwei verschiedene Achsen montiert sind;
(B) Berechnen der Belastungsdifferenz zwischen den zwei Reifen-Rad-Einheiten ausgehend von der Geschwindigkeit des Fahrzeugs und den Drehfrequenzen der zwei Reifen-Rad-Einheiten, unter Berücksichtigung der laufenden Fülldrücke;
(C) Bestimmen des Belastungszustands durch Vergleich der berechneten Belastungsdifferenz mit mindestens einem vorab erstellten Schwellwert;
(D) Bestimmen eines unteren Schwellwerts für den Fülldruck, der an den Belastungszustand des Fahrzeugs und an die Position der ersten Reifen-Rad-Einheit am Fahrzeug angepasst ist;
(E) Bestimmen des Fülldrucks der ersten Reifen-Rad-Einheit und Warnung des Fahrers des Fahrzeugs, wenn der Fülldruck der ersten Reifen-Rad-Einheit unter dem unteren Schwellwert liegt.

3. Verfahren zur Anpassung des Fülldrucks einer ersten Reifen-Rad-Einheit (41-42, 51-52) eines mit einer Geschwindigkeit ungleich Null in Bewegung befindlichen Fahrzeugs (60), wobei das Fahrzeug ausgestattet ist mit

- mehreren Reifen-Rad-Einheiten, die auf mindestens zwei Achsen montiert sind,
- Vorrichtungen, die es ermöglichen, die Geschwindigkeit des Fahrzeugs, die Drehfrequenzen oder Drehgeschwindigkeiten und die laufenden Fülldrücke von mindestens zwei Reifen-Rad-Einheiten zu bestimmen, die auf zwei verschiedene Achsen montiert sind, und
- einer Vorrichtung, die es ermöglicht, den Fülldruck der ersten Reifen-Rad-Einheit zu verändern,

wobei das Verfahren die folgenden Schritte aufweist:

(A) Bestimmen der Fülldrücke und der Drehfrequenzen von zwei Reifen-Rad-Einheiten, die auf zwei verschiedene Achsen montiert sind;
(B) Berechnen der Belastungsdifferenz zwischen den zwei Reifen-Rad-Einheiten ausgehend von der Geschwindigkeit des Fahrzeugs und den Drehfrequenzen der zwei Reifen-Rad-Einheiten, unter Berücksichtigung der laufenden Fülldrücke;
(C) Bestimmen des Belastungszustands durch Vergleich der berechneten Belastungsdifferenz mit mindestens einem vorab erstellten Schwellwert;
(D) Bestimmen eines unteren Schwellwerts für den Fülldruck der ersten Reifen-Rad-Einheit, der an den Belastungszustand des Fahrzeugs und an die Position der ersten Reifen-Rad-Einheit am Fahrzeug angepasst ist;
(E) Bestimmen des Fülldrucks der ersten Reifen-Rad-Einheit und Erhöhung dieses Fülldrucks, wenn er unter dem unteren Schwellwert liegt.

4. Verfahren nach einem der Ansprüche 1 bis 3, **dadurch gekennzeichnet, dass** das Fahrzeug (60) außerdem Vorrichtungen aufweist, die es ermöglichen, eine Temperatur zu bestimmen, die jedem der Reifen der mindestens zwei Reifen-Rad-Einheiten zugeordnet ist, und dass die Berechnung der Belastungsdifferenz diese Temperatur berücksichtigt.

5. Verfahren nach Anspruch 4, **dadurch gekennzeichnet, dass** die den Reifen zugeordnete Temperatur die Temperatur des Füllgases der Reifen ist.

6. Verfahren nach einem der vorhergehenden Ansprüche, **dadurch gekennzeichnet, dass** die zwei auf zwei verschiedene Achsen montierten Reifen-Rad-Einheiten auf der gleichen Seite des Fahrzeugs montiert sind.

7. Verfahren nach Anspruch 6, **dadurch gekennzeichnet, dass** die zwei auf zwei verschiedene Achsen montierten Reifen-Rad-Einheiten auf der Fahrerseite des Fahrzeugs montiert sind.

8. Verfahren nach einem der vorhergehenden Ansprüche, **dadurch gekennzeichnet, dass** die Bestimmung des Belastungszustands erst durchgeführt wird, wenn die Geschwindigkeit des Fahrzeugs eine gewisse vorbestimmte Grenze überschreitet.

9. Verfahren nach einem der vorhergehenden Ansprüche, **dadurch gekennzeichnet, dass** die Schritte (A) und (B) außerdem für mindestens ein weiteres Paar von verschiedenen Reifen-Rad-Einheiten durchgeführt werden, und dass die Bestimmung des Belastungszustands auf der Basis von mindestens zwei berechneten Belastungsdifferenzen erfolgt.

FIG. 1

(a)               (b)               (c)               (d)

FIG. 2

$$\langle E_{i,0}^{rel}(t) \rangle \longrightarrow \boxed{R_0} \longrightarrow \xrightarrow{\delta R_{i,0}} \bigcirc \longrightarrow \boxed{\dfrac{1}{\dfrac{\partial R_{i,0}}{\partial z}}} \longrightarrow z_i - z_0$$

$$\langle P_i(t) - P_0(t) \rangle \longrightarrow \boxed{\dfrac{\partial R_{i,0}}{\partial P}} \longrightarrow \bigcirc$$

$$\langle f_0(t) \rangle \longrightarrow \boxed{\dfrac{\partial R_{i,0}}{\partial f}} \longrightarrow \bigcirc$$

FIG. 3

$$\langle E_{i,0}^{rel}(t) \rangle \longrightarrow \boxed{R_0} \longrightarrow \xrightarrow{\delta R_{i,0}} \bigcirc \longrightarrow \boxed{\dfrac{1}{\dfrac{\partial R_{i,0}}{\partial z}}} \longrightarrow z_i - z_0$$

$$\langle P_i(t) - P_0(t) \rangle \longrightarrow \boxed{\dfrac{\partial R_{i,0}}{\partial P}} \longrightarrow \bigcirc$$

$$\langle T_i(t) - T_0(t) \rangle \longrightarrow \boxed{\dfrac{\partial R_{i,0}}{\partial T}} \longrightarrow \bigcirc$$

$$\langle f_0(t) \rangle \longrightarrow \boxed{\dfrac{\partial R_{i,0}}{\partial f}} \longrightarrow \bigcirc$$

FIG. 4

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03016115 A